# EUROPEAN PATENT SPECIFICATION

(11) **EP 1 622 474 B1**
(45) Date of publication and mention of the grant of the patent: **31.03.2010**
(21) Application number: 03725388.7
(22) Date of filing: 12.05.2003
(51) Int. Cl.: A41D 13/012, B32B 5/18

(54) **GARMENT INCLUDING FOAM MATERIAL**
KLEIDUNGSSTÜCK MIT EINER SCHAUMSTOFFSCHICHT
VETEMENT OBTENU A PARTIR D'UNE MATIERE MOUSSE

(43) Date of publication of application: 08.02.2006
(73) Proprietor: Sundridge Tackle Limited, Rochester, Kent ME3 9LW (GB)
(72) Inventor: CARROLL, John, Sundridge Tackle Limited, Rochester, Kent ME3 9LW (GB)
(74) Representative: Gilmour, David Cedric Franklyn
(86) International application number: PCT/GB2003/002022
(87) International publication number: WO 2004/098328

(56) References cited:
- EP-A- 1 136 002
- WO-A-98/53980
- WO-A-99/14037
- WO-A-03/041525
- US-A- 5 098 770
- US-A1- 2002 165 474

## Description

The present invention concerns a garment including a closed cell foam material and especially intended for use as a buoyancy aid.

Flotation suits or garments are generally produced having a waterproof outer shell material or fabric which is normally coated on its normally inner side with a breathable polyurethane film or other layer which allows air and/or water vapour to pass through but not water, thus forming a waterproof breathable outer shell or fabric layer. Thus, any water vapour resulting from perspiration of the user can be dispersed through the outer shell to the outside so as to keep the user dry and comfortable.

Floatation suits or other garments or buoyancy aids are made buoyant by having a layer of buoyant plastics material foam stitched as part of the garment inwardly of the outer shell material or fabric. The plastics foam has closed cells, such as air and/or vapour filled bubbles, which provide buoyancy should the user fall into the water. The foam also acts as thermal insulation.

In WO 03/041525A Fagerdala Tuotanto Oy, which was published on 22 May 2003 and after the filing date of the present application (Art 54(3) EPC), there is disclosed flotation material having through-cuts and wherein the material is used and provided in garments with the openings stretched open or kept open by being laminated to a fabric backing.

A problem with existing buoyant foam sheet was that it is not breathable i.e. air and/or water vapour cannot pass through it. The wearer of such a garment can, therefore, become uncomfortable through perspiration being unable to be dispersed to the outside of the garment.

Initially we proposed an improved flotation or buoyant foam material in which in order to permit water vapour to pass through the foam apertures in the foam wherein significant amount of material was removed from the foam sheet to leave normally open holes through the foam so as to allow water vapour to pass through. We have now discovered that the use of such holes is not satisfactory because the resultant foam is weakened and/or does not meet, for example, CE safety requirements for buoyancy aids.

We have now discovered that forming through normally open holes in the foam when flat involving removal of a significant amount of material to produce a hole of a shape corresponding to the removed material reduces the thermal stability in that when subject to low temperatures e.g. 30°C for a period and then returned to normal temperature, the volume or buoyancy characteristics do not return to such as they were originally. Also, when subject to compression tests in which the foam material is compressed for a period and then released, the foam material does not return sufficiently closely to its original thickness to allow it to pass the CE testing or other. In this respect, it is believed the removal of foam material in the formation of holes provides a space into which the foam may spread into during compression and then does not later turn on release of the compression.

We have unexpectedly discovered that when slits or cuts and/or needle-punched holes are provided in the foam which does not involve the removal of foam material or involves only minimal removal of material as a result of, e.g. cutting or puncturing, the required characteristics of the foam are maintained within allowable ranges thus enabling the material to be used as a buoyancy aid meeting regulation requirements. The size and/or spacing of the slits or needle-punched holes has or have to be selected so as to make the resultant foam material comply with strength requirements of, for example, CE testing.

According to the present invention there is provided a garment including a fabric combination with said combination comprising a flexible or pliable closed cell foam material in sheet form, wherein the foam material is buoyant in water and has one or more slits or cuts and/or needle-punched holes therein extending through the sheet from one surface to the other, and an outer fabric sheet or outer fabric layer, and characterized in that the foam material and outer fabric sheet of an outer fabric layer are stitched or otherwise bonded together in peripheral regions leaving the foam and outer fabric sheet or outer fabric layer merely juxtaposed in other regions wherein the side surfaces defining the slits and/or holes are normally in abutment and/or in close proximity when the sheet is flat or unflexed and separate or press less against each other when flexed to allow air and/or water vapour to pass there through, and in that no or minimum removal of foam material having occurred in the slitting or cutting and/or needle-punching.

The slits or cuts preferably each comprise at least two intersecting linear slits or so-called "cross-cuts".

The slits may be in the form of straight line cuts or a cross, for example, an "X" or "+", or in the form of a "Y" or "V" or any other form which will allow the passage of water - vapour on flexing.

The length and/or configuration and/or spacing of the slits or cuts or holes are selected to achieve the required rate passage of water vapour or breathability as required.

Each slit or cut is preferably but not essentially about 3 mm long and/or the foam material is normally in the range of 2 mm to 6 mm thick depending on the buoyancy required.

Preferably the closed cell foam material is formed of a synthetic material such as a polymeric foam such as polyurethane or neoprene or any suitable material. The closed cells may contain bubbles of vapour or air.

Preferably the slits or cuts and/or needle-punched holes are selected to be of a spacing and/or selected to be each of a shape and/or size and/or length as to minimise or not adversely affect the strength and/or shrinkage rate of the foam sheet such as relevant in the subjection to thermal stability testing and/or compression testing for meeting quality requirements for buoyancy aids.

The sheet foam material is regular or plain or normally planar (i.e. without any dome-like configurations, projections or extensions where the apertures are).

The outer fabric sheet or layer e.g. nylon fabric or polyester or other, may be waterproof or waterproof and water-vapour permeable e.g. by having a hydrophilic or micro-porous or other suitable coating on the inside.

Preferably an innermost permeable lining layer will be provided inwardly of the foam material sheet or layer and between the latter and the outer layer a non-woven or other "slip" layer provided to ensure the foam material moves freely relative to the outer layer.

For a jacket, the foam material layer will normally be provided over most of the area thereof - similarly for the upper part of a boiler suit. For leggings and the legs of a boiler suit, a thinner sheet of foam or less of such be provided or reduced in the lower regions.

Also according to the present invention there is provided a method of making a garment including a fabric combination of an outer and preferably waterproof fabric sheet or outer fabric layer and a closed cell foam material which is buoyant in water and breathable or such as to enable air and/or water vapour to pass therethrough, whilst at the same time as not reducing the strength and/or the resilient characteristics as tested for in thermal stability and/or compression testing for buoyancy and device regulations, comprises forming slits or cuts and/or needle-punched holes in the foam material such that no foam material is removed or only consequential minimal amounts are removed in the process and the surfaces defining the slit and/or hole are normally in abutment or in close proximity when flat, and selecting the size and/or spacing of the slits and/or punched holes such as not to impair strength and/or resilient characteristics, and stitching or otherwise bonding together the foam material and the outer fabric sheet or outer fabric layer in peripheral regions leaving the foam and fabric sheet merely juxtaposed in other regions wherein the side surfaces defining the slits and/or holes are normally in abutment and/or in close proximity when the sheet is flat or unflexed and separate or press less against each other when flexed to allow air and/or water vapour to pass therethrough.

(During examination of this application US 2002/01654A1 was discovered which discloses a laminate material for orthopaedic braces comprising a center elastic layer (110) of closed cell foam material having intersecting channels (140) in which through cuts (150) are provided for the passage of air and perspiration especially when stretched. Porous inner and outer fabric layers (130, 120) are bonded to the whole of the area of the layer (110) - the inner layer (130) not being bonded where the channels are present.

The invention will be described further, by way of example, with reference to the accompanying drawings, in which:-
Fig. 1 is a plan view of a part of a flat sheet of closed cell foam material to be included in a garment according to the invention;
Fig. 2 is an enlarged partially cut-away fragmentary perspective detail of a cross-cut of the sheet of Fig. 1 but slightly flexed;
Fig. 3 is a section through three cross cuts of Fig. 1;
Fig. 4 is an inverted plan of part of the flat sheet of Fig. 1;
Fig. 5 is a schematic plan of an alternative embodiment of the foam material part having needle-punched holes;
Fig. 6 is a schematic plan of an alternative embodiment having straight line cuts; and
Fig. 7 is a schematic cross section through the layers of a garment including the foam material of Fig. 1 according to the invention.

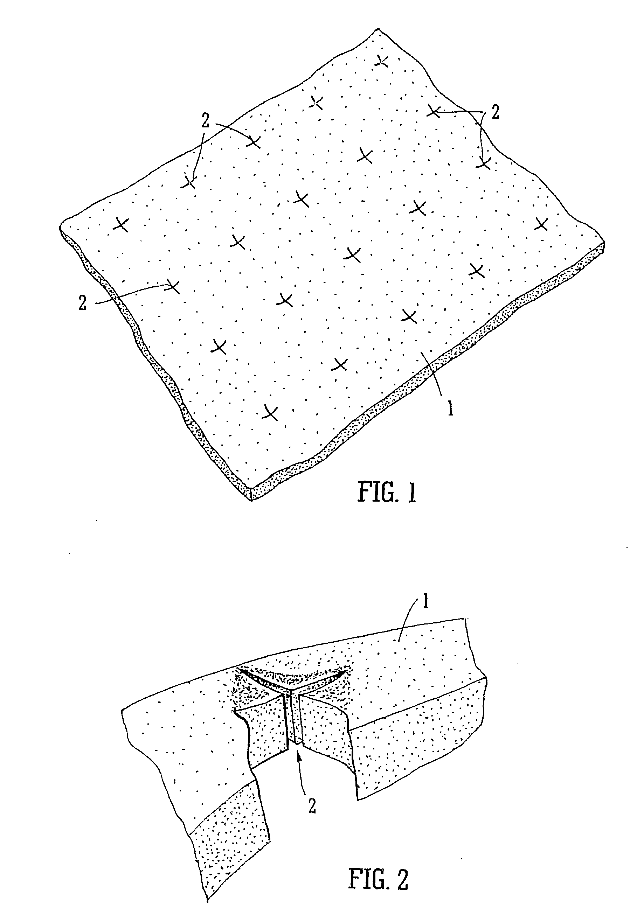

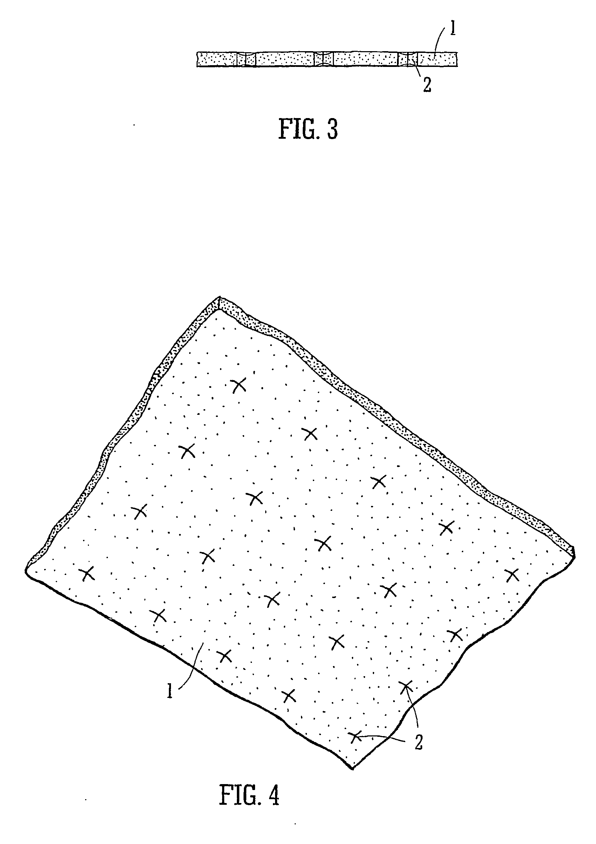

In Figs. 1 to 4 a flat flexible closed cell foam material sheet 1 is illustrated which may, for example, be of polyethylene, and is to form part of a garment. The sheet is in the region of 3 mm thick.

A plurality of parallel rows of cross-cut slits 2 or cruciform cuts 2 formed by intersecting linear slits of approximately 3 mm length are provided in the sheet 1 extending therethrough from one surface to the opposite surface. The slits 2 are also aligned with slits in adjacent rows.

The slits 2 may be formed by using a razor cutter or knife cutter or like sharp thin cutting device or other method such that foam material is not removed or only a minimal amount is removed from the sheet 1 in the process. The slits 2 are such that when the sheet 1 is laid flat the slits are closed or substantially closed but when the sheet 1 is flexed, the slits 2 open to allow water vapour to pass.

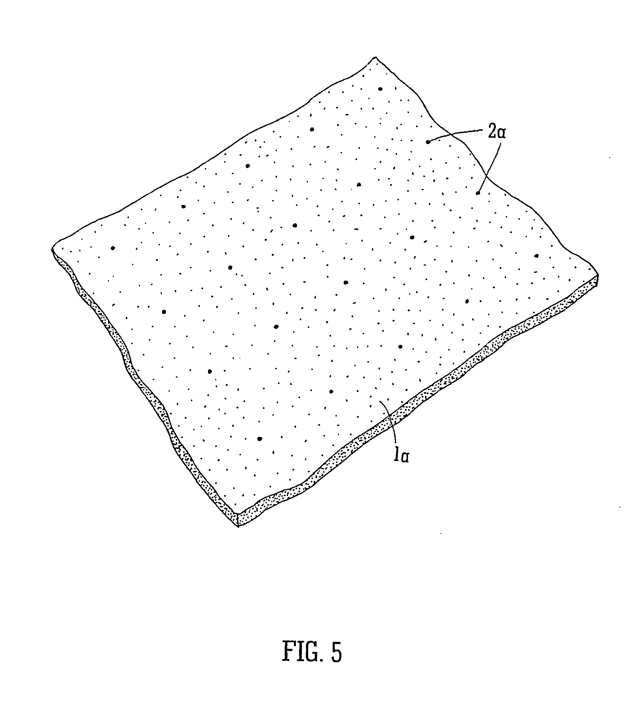

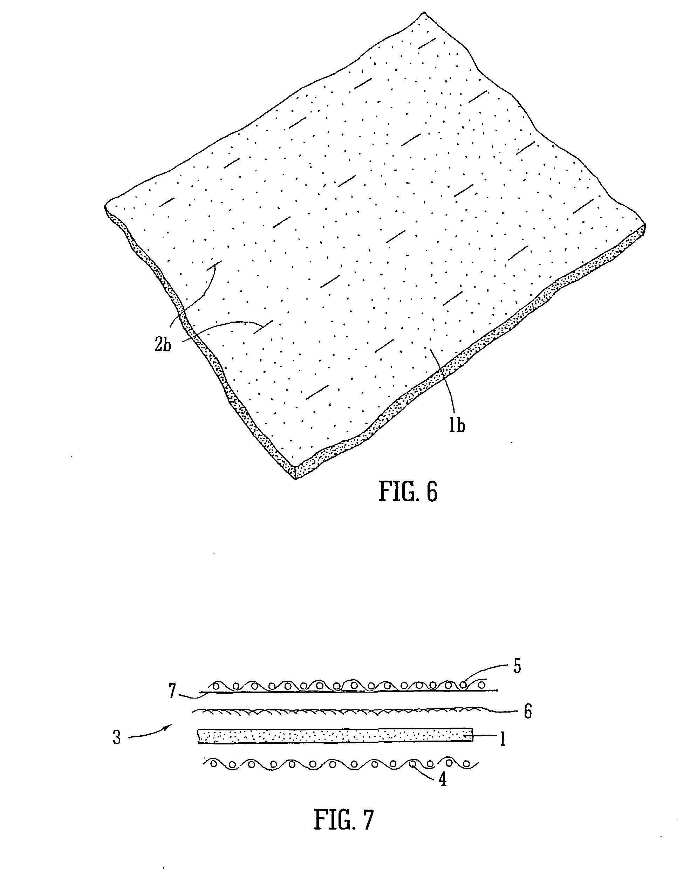

Fig. 5 is a schematic plan Illustrating a part of a flexible closed cell foam material sheet 1a wherein a plurality of aligned rows of "needle-punched" holes 2a are provided pierced through the foam sheet 1a. Fig. 6 shows simply straight line elongate slits 2b in such foam material.

The side surfaces of the foamed plastics material defining the slits and/or holes 2, 2a and 2b are normally in abutment and/or close proximity ("substantially closed") when the sheet is flat or unflexed and are such as to advantageously separate or press less against each other ("open") when the sheet is flexed to allow air and/or water vapour to pass therethrough. The slits or cuts will preferably comprise elongate slits or at least two intersecting linear slits or so-called "cross-cuts" although many suitable shapes are possible.

Fig. 7 is a schematic cross section through part of a garment 3 according to the invention including the foam material sheet 1 and includes an inner lining fabric layer 4, a outer waterproof and water vapour permeable fabric layer 5 and a non-woven, "slip" layer 6 between the foam layer, and outer layer 5 provided to enable layers 1 and 5 to readily move relative to each other. The outer layer 5 has a hydrophilic polymer coating or micro-porous or other coating 7 on its normally inner surface to provide the mentioned vapour permeability to the outer layer 5. The layers 4, 1, 6 and 5 are stitched together in peripheral/seam regions (not shown).

## Claims

1. A garment (3) including a fabric combination with said combination comprising a flexible or pliable closed cell foam material (1) in sheet form, wherein the foam material (1) is buoyant In water and has one or more slits or cuts (2) and/or needle punched holes (2a) therein extending through the sheet from one surface to the other, and an outer fabric sheet or outer fabric layer (5), and **characterized in that** the foam material (1) and outer fabric sheet or outer fabric layer (5) are stitched or otherwise bonded together in peripheral regions leaving the foam (1) and outer fabric sheet or outer fabric layer (5) merely juxtaposed in other regions wherein the side surfaces defining the slits (2) and/or holes (2a) are normally in abutment and/or close proximity when the sheet is flat or unflexed and separate or press less against each other when flexed to allow air and/or water vapour to pass therethrough, and **in that** no or minimum removal of foam material (1) having occurred in the slitting or cutting and/or needle-punching.

2. A garment as claimed in claim 1, in which the slits or cuts (2) and/or needle-punched holes (2a) are selected to be of a spacing and/or selected to be each of a shape and/or size and/or length as to minimize or not adversely affect the strength and/or shrinkage rate of the foam sheet material (1) such as regards the subjection to thermal stability testing and/or compression testing for buoyancy aids.

3. A garment as claimed in claim 1 or 2, in which the slits or cuts (2) each comprise at least two intersecting linear slits or so-called "cross-cuts".

4. A garment as claimed in any of claims 1 to 3, in which the slits (2) are in the form of slits or a cross, for example, an "X' or "+", or in the form of a "Y" or "V" or any other form which will allow the passage of water-vapour on flexing.

5. A garment as claimed in any of claims 1 to 4, which the closed cells or bubbles contain vapour or air.

6. A garment as claimed in any of claims 1 to 5, in which each slit or cut (2) is about 3 mm Jong and/or the foam material (1) is 2 mm to 6 mm thick depending on the buoyancy required.

7. A garment as claimed in claim 6, in which the slits or cuts (2) and/or holes (2a) are spaced at different intervals as required.

8. A garment as claimed in any of claims 1 to 7, in which the sheet is regular or plain or normally planar.

9. A garment as claimed in claim 8, in which the sheet is without any dome-like configurations, projections or extensions in the regions where the apertures (2, 2a) are.

10. A garment (3) according to claim 1, wherein the outer fabric sheet or outer fabric layer (5) is a waterproof fabric sheet or waterproof fabric layer (5) and the foam material (1) is foamed plastics material having vapour or air filled bubbles or closed cells and having said cuts or slits (2) or piercings (2a) through the foam (1) which do not involve said removal of foam material or of only said minimal amounts and which said cuts or piercings (2, 2a) in the unflexed condition of the foam (1) are closed or substantially closed but which open on flexing of the foam such as to allow water vapour to pass through the foam (1).

11. A garment including foam material as claimed in claim 10, in which the cuts or slits (2) are elongate slits or "X"-shaped cuts or so called cross-cuts or slits.

12. A garment including 2 fabric combination as claimed in any of claims 1 to 11, in which the outer fabric layer or outer fabric sheet (5) is waterproof and/or waterproof and water-vapour permeable.

13. A method of making a garment (3) including a fabric combination of an outer fabric sheet or outer fabric layer (5) and a closed cell foam material (1) which is buoyant in water and breathable or such as to enable air and/or water vapour to pass therethrough whilst at the same time as not reducing the strength and/or the resilient characteristics as tested for in thermal stability and/or compression testing for buoyancy aid device regulations, comprises forming slits or cuts (2) and/or needle-punched holes (2a) in the foam material (1) such that no foam material (1) is removed or only minimal foam material (1) is removed in the process and the surfaces defining the slit (2) and/or hole (2a) are normally in abutment or in close proximity when flat, and selecting the size and/or spacing of the slits (2) and/or punched holes (2a) as not to impair strength and/or resilient characteristics, and stitching or otherwise bonding together the foam material (1) and outer fabric sheet or outer fabric layer (5) in peripheral regions leaving the foam and fabric sheet/layer merely juxtaposed in other regions, wherein the side surfaces defining the slits (2) and/or holes (2a) are normally in abutment and/or close proximity when the sheet is flat or unflexed and separate or press less against each other when flexed to allow air and/or water vapour to pass therethrough,

14. The method according to claim 13, in which the outer fabric sheet or outer fabric layer (5) is waterproof.

## Patentansprüche

1. Kleidungsstück (3), umfassend einen Gewebeverbund mit einer bestimmten Zusammenstellung, umfassend ein flexibles oder formbares geschlossenzelliges Schaummaterial (1) in Bahnenform, wobei das Schaummaterial (1) in Wasser schwimmfähig ist und ein oder mehrere Schlitze oder Schnitte (2) und/oder durch Nadeln ausgestanzte Löcher (2a) darin aufweist, die sich durch die Platte von einer Oberfläche zur anderen erstrecken, und eine äußere Stofflage oder eine äußere Stoffschicht (5) aufweist, **dadurch gekennzeichnet, dass** das Schaummaterial (1) und die äußere Stofflage oder äußere Stoffschicht (5) im Umfangsbereich zusammengeheftet oder auf eine andere Art und Weise verbunden sind, so dass das Schaummaterial (1) und die äußere Stofflage oder äußere Stoffschicht (5) in anderen Bereichen nur gegenüberliegen und dass beim Schlitzen oder Schneiden und/oder Stanzen mit Hilfe von Nadeln kein oder nur ein geringer Abtrag von Schaummaterial (1) erfolgt.

2. Kleidungsstück gemäß Anspruch 1, wobei die Schlitze oder Schnitte (2) und/oder durch Nadeln ausgestanzte Löcher (2a) so ausgewählt werden, dass es sich um einen Zwischenraum handelt oder dass deren Form und/oder Größe und/oder Länge so ausgewählt wird, dass die Stärke und/oder das Schrumpfverhalten des bahnförmigen Schaummaterials (1) im Hinblick auf die Prüfung der thermischen Stabilität und/oder des Druckverhaltens von Auftriebhilfen verringert oder nicht negativ beeinflusst wird, wobei sich die seitlichen Oberflächen der Schlitze (2) und/oder Löcher (2a) in unmittelbarer Umgebung oder angrenzend befinden, sofern die Folie flach oder nicht gebeugt und getrennt ist, oder weniger gegeneinander drücken, sofern die Folie gebeugt ist, um Luft und/oder Wasserdampf durch die Folie passieren zu lassen.

3. Kleidungsstück gemäß Anspruch 1 oder 2, wobei die Schlitze oder Schnitte (2) jeweils wenigstens 2 sich überschneidende gerade Schlitze oder sogenannte kreuzförmige Feinschnitte umfassen.

4. Kleidungsstück gemäß einem oder mehreren der Ansprüche 1 bis 3, wobei die Schlitze (2) die Form einer Spalte oder die Form eines Kreuzes, beispielsweise ein "X" oder "+", oder die Form eines "Y" oder eines "V" oder jede andere Form aufweisen, die beim Biegen den Durchgang von Wasserdampf ermöglicht.

5. Kleidungsstück gemäß einem oder mehreren der Ansprüche 1 bis 4, wobei die geschlossenen Zellen oder Blasen Wasserdampf oder Luft beinhalten.

6. Kleidungsstück gemäß einem oder mehreren der Ansprüche 1 bis 5, wobei jeder Schlitz oder Schnitt (2) ungefähr 3 mm lang ist und/oder das Schaummaterial (1) in Abhängigkeit vom erforderlichen Auftrieb eine Dicke im Bereich zwischen 2 mm und 6 mm aufweist.

7. Ein Kleidungsstück gemäß Anspruch 6, wobei die Schlitze oder Schnitte (2) und/oder Löcher (2a) je nach Erfordernis in verschiedenen Abständen angeordnet sind.

8. Ein Kleidungsstück gemäß einem oder mehreren der Ansprüche 1 bis 7, wobei die Folie ebenflächig oder flach oder im Wesentlichen ebenflächig ist.

9. Kleidungsstück gemäß Anspruch 8, wobei die Folie in den Bereichen, wo sich die Durchgangsöffnungen (2, 2a) befinden, keine kuppelähnlichen Ausgestaltungen, Vorsprünge oder Verlängerungen aufweist.

10. Kleidungsstück (3) gemäß Anspruch 1, wobei die äußere Stofflage oder die äußere Stoffschicht (5) eine wasserdichte Stofflage oder eine wasserdichte Stoffschicht ist (5) und das Schaummaterial aus aufgeschäumten Kunststoffen besteht, die mit Wasserdampf oder Luft gefüllte Blasen oder geschlossene Zellen aufweisen und Schnitte oder Schlitze (2) oder Einstiche (2a) im Schaummaterial (1) aufweisen, ohne dass Schaummaterial entfernt werden muss oder nur geringe Mengen Schaummaterial entfernt werden müssen, und deren Schnitte oder Einstiche (2, 2a) im ungebeugten Zustand des Schaums (1) geschlossen oder im Wesentlichen geschlossen sind, sich aber beim Biegen des Schaums öffnen, so dass Wasserdampf durch den Schaum (1) passieren kann.

11. Kleidungsstück gemäß Anspruch 10, wobei die Schnitte oder Schlitze (2) verlängerte Schlitze oder "X"-förmige Schnitte oder sogenannte kreuzförmige Einschnitte oder Schlitze sind.

12. Kleidungsstück umfassend einen Gewebeverbund gemäß einem oder mehreren der Ansprüche 1 bis 11, wobei die äußere Stoffschicht oder äußere Stofflage (5) wasserdicht und/oder wasserdicht und wasserdampfdurchlässig ist.

13. Verfahren zur Herstellung eines Kleidungsstücks (3), umfassend einen Gewebeverbund aus einer äußeren Stofflage und/oder einer äußeren Stoffschicht (5) und einem geschlossenzelligen Schaummaterial (1), das in Wasser schwimmfähig ist und atmungsaktiv ist, oder so ausgebildet, dass es Luft und/oder Wasserdampf ermöglicht, dort hindurch zu passieren, während zur gleichen Zeit die Stärke und/oder Belastbarkeit, wie sie in Wärmestabilitäts- und/oder Drucktests für Auftriebhilfen nach Geräteausführungsrichtlinien gemessen wird, nicht vermindert wird, umfassend die Bildung von Schlitzen oder Schnitten (2) und/oder mit Hilfe von Nadeln gestanzten Löchern (2a) im Schaummaterial (1), ohne dass während des Verfahrens Schaummaterial (1) entfernt wird oder nur geringe Mengen Schaummaterial (1) entfernt werden, und die Oberflächen, die die Schlitze (2) und/oder Löcher (2a) bilden, sich im flachen Zustand in unmittelbarer Umgebung oder angrenzend befinden, und die Größe und/oder Abstände der Schlitze (2) und/oder durch Nadeln gestanzten Löcher (2a) so gewählt werden, dass die Stärke und Belastbarkeitseigenschaften nicht beeinträchtigt werden, und das Schaummaterial (1) und die äußere Stofflage oder äußere Stoffschicht (5) im Umfangsbereich zusammengeheftet oder auf eine andere Art und Weise verbunden werden, so dass das Schaummaterial (1) und die äußere Stofflage oder äußere Stoffschicht (5) in anderen Bereichen nur gegenüberliegen.

14. Das Verfahren gemäß Anspruch 13, wobei die äußere Stofflage oder äußere Stoffschicht (5) wasserdicht ist.

## Revendications

1. Un vêtement (3) comprenant une combinaison de tissus, ladite combinaison comprenant un matériau de mousse à cellules fermées (1) flexible ou pliable en forme de feuille, dans lequel le matériau de mousse (1) flotte dans l'eau et comporte un(e) ou plusieurs fentes ou entailles (2) et/ou trous pratiqués à l'aiguille (2a) dedans s'étendant à travers la feuille d'une surface à l'autre, et une feuille de tissu extérieure ou couche de tissu extérieure (5), et **caractérisé en ce que** le matériau de mousse (1) et la feuille de tissu extérieure ou la couche de tissu extérieure (5) sont piqués ou reliés ensemble d'une autre manière dans des régions périphériques laissant la mousse (1) et la feuille de tissu extérieure ou la couche de tissu extérieure (5) simplement juxtaposées dans d'autres régions, dans lequel les surfaces latérales définissant les fentes (2) et/ou les trous (2a) sont normalement en butée et/ou à proximité immédiate lorsque la feuille est à plat ou non pliée, et séparées ou au moins appuyées l'une contre l'autre lorsqu'elle est pliée afin de permettre à l'air et/ou à la vapeur d'eau de passer à travers, et **en ce qu'**aucun retrait ou un retrait minimum de matériau de mousse (1) a eu lieu lors du processus de formation de fentes ou d'entailles et/ou trous percés à l'aiguille.

2. Vêtement selon la revendication 1, dans lequel les fentes ou entailles (2) et/ou les trous pratiqués à l'aiguille (2a) sont sélectionnés pour avoir un espacement et/ou sélectionnés pour être chacun d'une forme et/ou d'une taille et/ou d'une longueur telles qu'elles réduisent au minimum, ou n'affectent pas de manière négative la résistance et/ou le taux de rétrécissement du matériau de feuille en mousse (1), par exemple concernant la soumission à des essais de stabilité thermique et/ou des essais de compression pour les aides à la flottabilité.

3. Vêtement selon la revendication 1 ou 2, dans lequel les fentes ou entailles (2) comprennent chacune au moins deux fentes linéaires qui se croisent ou entailles dites « en croix ».

4. Vêtement selon l'une quelconque des revendications 1 à 3, dans lequel les fentes (2) ont la forme de fentes ou d'une croix, par exemple, un « X » ou « + », ou la forme d'un « Y » ou d'un « V », ou toute autre forme permettant le passage de la vapeur d'eau lors d'une flexion.

5. Vêtement selon l'une quelconque des revendications 1 à 4, dans lequel les cellules fermées ou les bulles contiennent de la vapeur ou de l'air.

6. Vêtement selon l'une quelconque des revendications 1 à 5, dans lequel chaque fente ou entaille (2) fait environ 3 mm de long et/ou le matériau de mousse (1) fait 2 mm à 6 mm d'épaisseur en fonction de la flottabilité requise.

7. Vêtement selon la revendication 6, dans lequel les fentes ou entailles (2) et/ou les trous (2a) sont espacés à différents intervalles selon les besoins.

8. Vêtement selon l'une quelconque des revendications 1 à 7, dans lequel la feuille est régulière ou lisse ou normalement plane.

9. Vêtement selon la revendication 8, dans lequel la feuille est sans configurations en dôme, saillies ou extensions dans les régions où se trouvent les ouvertures (2, 2a).

10. Vêtement (3) selon la revendication 1, dans lequel la feuille de tissu extérieure ou couche de tissu extérieure (5) est une feuille de tissu imperméable à l'eau ou une couche de tissu imperméable à l'eau (5) et le matériau de mousse (1) est un matériau en plastique expansé ayant des bulles ou des cellules fermées remplies de vapeur ou d'air et dont lesdit(e)s entailles ou fentes (2) ou perçages (2a) à travers la mousse (1) ne nécessitent pas ledit retrait de matériau de mousse ou de seulement lesdites quantités minimales, et lesdit(e)s entailles ou perçages (2, 2a) dans l'état non plié de la mousse (1) étant fermés ou sensiblement fermés, mais s'ouvrant lors de la flexion de la mousse de manière à permettre à la vapeur d'eau de traverser la mousse(1).

11. Vêtement comprenant un matériau de mousse selon la revendication 10, dans lequel les entailles ou fentes (2) sont des fentes allongées ou des entailles en forme de « X » ou des fentes ou entailles dites « en croix ».

12. Vêtement comprenant une combinaison de tissus selon l'une quelconque des revendications 1 à 11, dans lequel la couche de tissu extérieure ou feuille de tissu extérieure (5) est imperméable à l'eau et/ou imperméable à l'eau et perméable à la vapeur d'eau.

13. Un procédé de fabrication d'un vêtement (3) comprenant une combinaison de tissus comprenant une feuille de tissu extérieure ou une couche de tissu extérieure (5) et un matériau de mousse à cellules fermées (1) qui flotte dans l'eau et « perméable à l'air » ou tel qu'il permet à l'air et/ou à la vapeur d'eau de passer à travers sans réduire la résistance et/ou les caractéristiques de résilience telles que testées lors des essais de stabilité thermique et/ou de compression dans le cadre des réglementations applicables aux dispositifs d'aide à la flottabilité, ledit procédé comprenant les étapes consistant à former des fentes ou entailles (2) et/ou des trous pratiqués à l'aiguille (2a) dans le matériau de mousse (1) de sorte qu'aucun matériau de mousse (1) n'est retiré ou qu'une quantité minimale seulement de matériau de mousse (1) est retirée lors du processus, les surfaces définissant la fente (2) et/ou le trou (2a) étant normalement en butée ou à proximité immédiate lorsqu'elles sont à plat, sélectionner la taille et/ou l'espacement des fentes (2) et/ou des trous percés (2a) de manière à ne pas affecter la résistance et/ou les caractéristiques de résilience, et piquer ou relier ensemble d'une autre manière le matériau de mousse (1) et la feuille de tissu extérieure ou la couche de tissu extérieure (5) dans des régions périphériques laissant la mousse et la feuille/couche de tissu simplement juxtaposées dans d'autres régions, dans lequel les surfaces latérales définissant les fentes (2) et/ou les trous (2a) sont normalement en butée et/ou à proximité immédiate lorsque la feuille est à plat ou non pliée, et séparées ou moins appuyées l'une contre l'autre lorsqu'elle est pliée pour permettre à l'air et/ou à la vapeur d'eau de passer à travers.

14. Procédé selon la revendication 13, dans lequel la feuille de tissu extérieure ou la couche de tissu extérieure (5) est imperméable à l'eau.
